(19) Europäisches Patentamt
European Patent Office
Office européen des brevets

(11) **EP 1 943 193 B1**

(12) **EUROPÄISCHE PATENTSCHRIFT**

(45) Veröffentlichungstag und Bekanntmachung des Hinweises auf die Patenterteilung:
**16.02.2011  Patentblatt 2011/07**

(51) Int Cl.:
*C02F 3/12* *(2006.01)*     *C02F 3/30* *(2006.01)*
*C02F 3/00* *(2006.01)*

(21) Anmeldenummer: 06790241.1

(22) Anmeldetag: **20.09.2006**

(86) Internationale Anmeldenummer:
**PCT/AT2006/000384**

(87) Internationale Veröffentlichungsnummer:
**WO 2007/033393 (29.03.2007 Gazette 2007/13)**

(54) **VERFAHREN ZUR BEHANDLUNG VON AMMONIUMHALTIGEM ABWASSER MITTELS PH-REGULIERUNG**

METHOD FOR THE TREATMENT OF AMMONIUM-CONTAINING EFFLUENT BY MEANS OF PH-REGULATION

PROCÉDÉ POUR TRAITER DES EAUX USÉES CONTENANT DE L'AMMONIAC GRACE À UNE RÉGULATION DE PH

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **20.09.2005  AT 15502005**

(43) Veröffentlichungstag der Anmeldung:
**16.07.2008  Patentblatt 2008/29**

(73) Patentinhaber: **Universität Innsbruck Institut für Umwelttechnik**
**6020 Innsbruck (AT)**

(72) Erfinder: **WETT, Bernhard**
**A-6020 Innsbruck (AT)**

(74) Vertreter: **Babeluk, Michael et al**
**Patentanwalt**
**Mariahilfer Gürtel 39/17**
**1150 Wien (AT)**

(56) Entgegenhaltungen:
**EP-A1- 0 751 098     US-A- 4 537 682**
**US-A- 5 160 621**

## Beschreibung

Die Erfindung betrifft ein Verfahren zur Behandlung von ammoniumhaltigem Abwasser in einem Einschlamm-System in einem SBR-Reaktor, bei dem in einer ersten Reaktion Ammonium zu Nitrit umgesetzt wird und in einer parallel ablaufenden zweiten Reaktion Ammonium und Nitrit zu molekularem Stickstoff umgesetzt werden, wobei die Sauerstoffkonzentration im Reaktor auf einem niedrigen Niveau gehalten wird.

In herkömmlichen Kläranlagen wird Ammonium zu Stickstoff umgesetzt, indem zunächst zwei Oxidationsschritte durchgeführt werden, in denen Stickstoff zunächst zu Nitrit und im Anschluss daran zu Nitrat umgesetzt wird (Nitrifikation) und danach die erzeugten Nitrate in einem zweistufigen Reduktionsverfahren zunächst zu Nitrit und im Anschluss daran zu molekularem Stickstoff reduziert werden (Denitrifikation). Je nach Führung des Verfahrens können Nitrifikation und Denitrifikation zeitlich nacheinander im selben Reaktor durchgeführt werden oder in verschiedenen Reaktoren ablaufen.

Es ist bekannt, dass es energetisch günstiger ist, anstelle der vollständigen Nitrifikation und Denitrifikation einen Prozess einzusetzen, bei dem das zunächst erzeugte Nitrit nicht weiter zu Nitrat oxidiert wird, sondern direkt zu Stickstoff reduziert wird. Es laufen also Nitritation und Denitritation abwechselnd oder simultan ab. Die Schwierigkeit bei diesem energetisch günstigeren Stickstoffmetabolismus liegt in einer stabilen Unterdrückung des zweiten Oxidationsschritts vom Nitrit zum Nitrat. Unter Bedingungen, wie sie in Kläranlagen zur Behandlung "normaler", d.h. kommunaler oder industrieller Abwässer vorliegen, weisen nitritoxidierende Mikroorganismen höhere Wachstums- und Umsatzraten auf als ammoniumoxidierende Mikroorganismen. Daher tritt das Zwischenprodukt Nitrit kaum auf. Allerdings sind hohe Temperaturen, hohe Ammoniak-Konzentrationen und niedere Sauerstoff-Konzentrationen Einflussfaktoren zur Bevorzugung des ersten Oxidationsschrittes gegenüber dem zweiten. Solche Verfahren sind daher, ebenso wie das Verfahren der vorliegenden Erfindung, primär für die biologische Behandlung von stark ammoniumhaltigem Abwasser geeignet, also etwa Prozesswasser, Deponiersickerwasser oder Schweinegülle. Diese Abwässer weisen hohe Ammonium-Konzentrationen auf und liegen im Allgemeinen bei relativ hohen Temperaturen vor.

In der EP 0 826 639 A ist ein Verfahren beschrieben, bei dem die zweite Oxidationsstufe weitgehend vermieden werden kann. Dabei wird in einem Chemostaten, das ist ein Reaktor ohne Schlammretention, das Schlammalter so eingestellt, dass sich die ammoniumoxidierenden Mikroorganismen noch etablieren können, während die nitritoxidierenden Mikroorganismen ausgeschwemmt werden.

Durch eine weitere Modifikation kann der oben beschriebene Prozess energetisch noch wesentlich günstiger gestaltet werden. Dabei wird ein Teil des Ammoniums zu Nitrit oxidiert und der übrige Teil des Ammoniums mit dem erzeugten Nitrit zu Stickstoff umgesetzt. Dieser Prozess wird in der Literatur auch als Anammox-Prozess bezeichnet.

Aus der US 6,383,390 ist ein Verfahren bekannt, das diesen energetisch günstigen Reaktionsweg nützt. Dabei wird die partielle Nitritation in einem ersten Reaktor durchgeführt und im Anschluss daran in einem zweiten Reaktor die Umsetzung zu Stickstoff mit den Anammox-Mikroorganismen durchgeführt.

Aus der WO 00/05176, wie auch aus der US 5,106,621 ist es bekannt, diese beiden Reaktionen simultan in einem Reaktor ablaufen zu lassen.

Die US 4,537,682 offenbart ein Verfahren, bei dem ammoniumhältiges Abwasser, das gegebenenfalls weitere Verunreinigungen enthält, in einem Einschlamm-System behandelt wird, wobei Ammonium in Nitrit, optional Nitrit in Nitrat umgewandelt werden und eine Denitrifikation von Nitrit/oder Nitrat vorgesehen ist.

Die EP 0 751 098 A1 betrifft ein Verfahren, bei dem ebenfalls Nitration und Denitrifikation in einem Einschlammsystem ablaufen, wobei bei Belüftung des Systems die Nitration stattfindet und nach Zugabe einer zweiten Abwasserfraktion mit vorzugsweisem hohem COD-Gehalt (chemical oxygen demand) eine Denitrifikation erfolgt.

Sämtlichen bekannten Verfahren ist jedoch gemeinsam, dass eine zuverlässige großtechnische Umsetzung bisher nicht dokumentiert wurde. Die Ursache dafür liegt in der Tatsache, dass die anaerob Ammonium oxidierenden (bzw. autotroph Nitrit reduzierenden) Mikroorganismen schon durch relativ geringe Nitritkonzentration irreversibel gehemmt werden. Aufgrund der extrem geringen Wachstumsrate dieser Mikroorganismen können daher schon retativ geringfügige Schwankungen in den Reaktionsbedingungen zu schwerwiegenden Störungen des Prozesses führen. Auch eine Absenkung des Sauerstoffgehaltes kann für sich allein genommen nicht zu einer Lösung dieser Probleme führen.

Erfindungsgemäß ist vorgesehen, dass der pH-Wert des Systems durch Steuerung einer intermittierenden Belüftung auf einem Sollwert geregelt wird, wobei die Schwankungsbreite des pH-Werte maximal 0,05 und vorzugsweise maximal 0,02 beträgt, und dass die $O_2$-Konzentration in einem Bereich zwischen 0,2 mg/l und 0,4 mg/l vorzugsweise zwischen 0,25 mg/l und 0,35 mg/l gehalten wird.

Es ist an sich bekannt, dass der pH-Wert durch die Belüftung beeinflusst werden kann, das heißt, dass eine Regelung des pH-Wertes dadurch möglich ist, dass die Belüftung vom pH-Wert abhängig gemacht wird. Dies ist beispielsweise in der EP 0 872 451 B für ein gegenüber der Erfindung unterschiedliches Verfahren beschrieben.

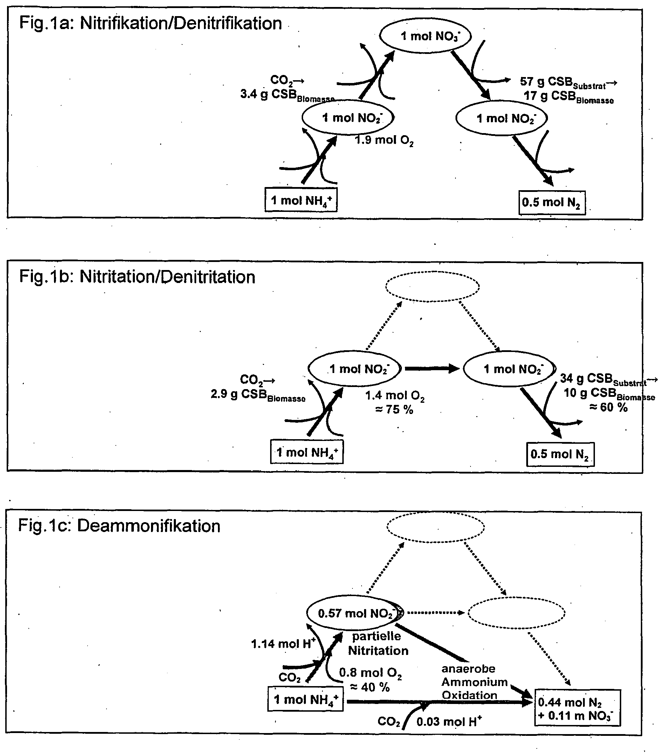

Wesentlich an der vorliegenden Erfindung ist jedoch die Erkenntnis, dass der pH-Wert auf einen extrem engen Bereich geregelt werden muss, gleichzeitig die Sauerstoffkonzentration auf einem eng definierten niederen Niveau gehalten werden muss und es darüber hinaus erforderlich ist, die Belüftung intermittierend zu gestalten. Dies bewirkt, dass während des Belüftungsintervalls eindeutig die Nitritbildung gegenüber der Nitritreduktion dominiert und während der Belüftungspause die Nitritreduktion vorherrscht. Da mit der Nitritbildung eine Freisetzung von H+ Ionen korrespondiert (Fig. 1c) und mit der Nitritreduktion eine H+ Bindung, kann über die Festlegung des pH-Steuerungsintervalls die maximale Nitritkonzentration im Reaktor vorgegeben werden. Die Wahl des niederen Sauerstoffgrenzwertes während des Belüftungsintervalls ermöglicht eine simultane Nitritreduktion und vermeidet damit zu häufiges Ein- und Ausschalten der Belüftung.

Überraschenderweise können unter den oben genannten Voraussetzungen besonders stabile Verfahrensbedingungen erreicht werden, mit denen Beeinträchtigungen durch die Hemmung der anaeroben Ammonium-Oxidierer durch Nitrit weitgehend ausgeschlossen werden können. Das System ist auch bei Schwankungen des Ammonium-Gehaltes im zugeführten Abwasser robust. Wie bereits oben ausgeführt, wird das Verfahren einstufig, also als Einschlamm-System in einer SBR-Anlage geführt. Im Vergleich zu einem herkömmlichen Nitrifikations/Denitrifikationsverfahren kann der Sauerstoffbedarf zur Umsetzung von Ammonium zu Stickstoff stoichiometrisch um 60% reduziert werden. Der Bedarf an organischem Kohlenstoff kann sogar um etwa 90% verringert werden.

Besonders vorteilhaft ist es, wenn der Reaktionsphase eine Ammoniak-Entfernungsphase nachgeschaltet ist, in der der pH-Wert herabgesetzt wird. Während der Reaktionsphase sollte die Ammoniak-Konzentration möglichst hoch sein, d.h. dass eine hohe Ammoniumkonzentration bei relativ hohem pH-Wert von beispielsweise 7,3 vorliegt. Dadurch wird die Nitritoxidation gehemmt. Andererseits sollte die Ammoniumkonzentration im Ablauf des behandelten Abwasser möglichst gering sein. Dies kann durch eine Absenkung des pH-Werts in einer anschließenden Ammoniak-Entfernungsphase erfolgen, in der ein um etwa 0,1 bis 0,3 verringerter pH-Wert eingestellt wird. Dadurch wird die verfügbare Alkalinität zur Nitrifikation genutzt. Die Dauer der Ammoniak-Entfernungsphase kann etwa 5% bis 25% der Dauer der Reaktionsphase betragen.

Alternativ dazu kann der Reaktionsphase eine Ammoniak-Entfernungsphase nachgeschaltet sein, in der ohne notwendige Veränderung des pH-Steuerungsintervalls eine grobblasige Belüftung durchgeführt wird. Auf diese Weise wird verstärkt $CO_2$ gestrippt, wodurch auch die verfügbare Alkalinität zur Nitrifikation genutzt wird.

Besonders hohe Umsatzraten können dadurch erreicht werden, dass der Sollwert des pH-Wertes in Abhängigkeit von der Sauerstofftransfereffizienz OTE in einem Bereich liegt, der durch

$$pH_s = 7,55 - 3 * OTE / 100 \pm 0,05$$

definiert ist. Dabei wird die Sauerstofftransfereffizienz OTE in Prozent angegeben. Dieser Wert hängt beispielsweise von der Geometrie des verwendeten Reaktors ab und beträgt typischerweise für seichte Reaktoren etwa 10%. Nach der obigen Formel ergibt sich in einem solchen Fall ein optimaler Sollwert für den pH-Wert von 7,25 mit einer Schwankungsbreite von 0,1, das heißt, ein Intervall von 7,2 bis 7,3. Im Fall z.B. höherer Reaktoren kann OTE etwa 20% betragen. In diesem Fall wird der so ermittelte pH-Wert von 6,95 vorzugsweise nur bei der Ammoniak-Entfernungsphase eingestellt.

Aufgrund der beobachteten Schaumprobleme bei der Behandlung der hochkonzentrierten Abwässer hat es sich bei der Anwendung des gegenständlichen Verfahrens als günstig erwiesen, den Abwasserzulauf oberhalb des Wasserspiegels in konstanter Menge zuzuleiten und möglichst großflächig zu verteilen und damit den gebildeten Schaum niederzuspritzen. Dazu eignen sich Sprinkleranlagen oder eine Zulaufverteilung auf Auslaufdüsen oder Prallteller.

Um eine stabile Population an langsam wachsenden anaeroben Ammonium-Oxidierern zu erhalten ist ein Schlammalter von mindestens 20 Tagen anzustreben. Dazu ist durch den Einsatz von Tauchwänden, Klappwehren, oberflächennahen Klarwasserabzügen oder Membranen eine ausreichende Schlammretention sicherzustellen. Gleichzeitig sollte jedoch die Schlammtrockensubstanz nicht unnötig hoch ansteigen (möglichst nicht über 10 g TS/I), um einen signifikanten Abfall der Sauerstoffeintragseffizienz zu vermeiden. Das heißt, die Festlegung der Überschussschlamm-Abzugsmenge (bzw. der Schlammabsetzdauer bei einem SBR ohne ÜS-Abzugseinrichtung) sollte auf ein Schlammalter von maximal 35 Tagen abzielen.

In der Folge wird die Erfindung anhand von Ausführungsbeispielen in Zusammenhang mit den beigefügten Zeichnungen näher erläutert. Es zeigen:

Fig. 1a, Fig. 1b, Fig. 1c    Diagramme, die die Massenbilanz verschiedener Reinigungssysteme zeigen;

Fig. 2    ein Diagramm, das die Effizienz des erfindungsgemäßen Verfahrens erklärt;

Fig. 3    ein Betriebsdiagramm, das die Verfahrensführung erklärt; und

Fig. 4    ein Diagramm, das den Einfluss grobblasiger Belüftung erklärt.

Fig. 1a zeigt einen herkömmlichen Nitrifikations/Denitrifikationsprozess, bei dem Ammonium, wie oben beschrieben, zunächst zu Nitrit und im Anschluss daran zu Nitrat oxidiert wird, welches über einen ersten Reduktionsschritt zu Nitrit und in einem zweiten Reduktionsschritt zu Stickstoff reduziert wird. Es ist ersichtlich, dass pro mol verarbeitetes Ammonium 1,9 mol Sauerstoff und eine erhebliche Menge an organischem Kohlenstoff erforderlich sind.

Fig. 1b zeigt ein Verfahren, bei dem die Bildung von Nitrat unterdrückt wird, so dass sich die erforderliche Sauerstoffmenge auf 1,4 mol Sauerstoff pro mol Ammonium beschränkt. Auch der Kohlenstoffeinsatz ist gegenüber dem Verfahren nach Fig. 1a verringert.

Fig. 1c zeigt die Reaktion, die dem erfindungsgemäßen Verfahren zu Grunde liegt. Bei diesem Verfahren erfolgt eine nur teilweise Nitritation parallel zur autotrophen Reduktion des gebildeten Nitrits. Der Sauerstoffbedarf sinkt auf ca. 0,8 mol Sauerstoff pro mol Ammonium. Dieser Prozess erfolgt dabei unter Einbeziehung unvermeidbarer Nebenreaktionen summarisch nach der folgenden Reaktionsgleichung:

$$NH_4^+ + 1.32\ NO_2^- + 0.066\ HCO_3^- + 0.13\ H^+ \rightarrow\ \rightarrow 0.26\ NO_3^- + 1.02\ N_2 + 0.066\ CH2O_{0.5}N_{0.15} + 2.03\ H_2O$$

Gemäß dieser Reaktionsgleichung benötigt die anaerobe autotrophe Ammonium-Oxidation mit Nitrit eine vorangehende aerobe autotrophe Oxidation von mindestens 57% des Gesamtammoniums, um dieses zu entfernen. Die Schwierigkeit bei der Entwicklung des bestehenden Systems lag im Übergang von einem bekannten und weithin eingesetzten Nitritations/Denitritationssystem, also einem System, das im Wesentlichen die Zugabe von organischem Kohlenstoff benötigt, und mit heterotropher Biomasse arbeitet zu einem System mit langsam wachsender autotropher Biomasse. Bei der Entwicklung des Systems wurde schrittweise ein mehrstufiger Übergang vom Labormaßstab zum großtechnischen Maßstab durchgeführt. Ausgehend von 4 Liter Inoculum aus einer Pilotanlage wurde ein 300 Liter Reaktor beimpft. Danach wurde die Reaktorgröße in Schritten von ein bis zwei Größenordnungen auf letztlich 500 m$^3$ vergrößert. Bei jedem Schritt war die Anreicherung der Biomasse ein empfindlicher Vorgang, bis ein robuster Prozess nach Erreichen einer kritischen Masse erreicht worden ist, die dann als Inoculum für den nächsten Reaktor gedient hat.

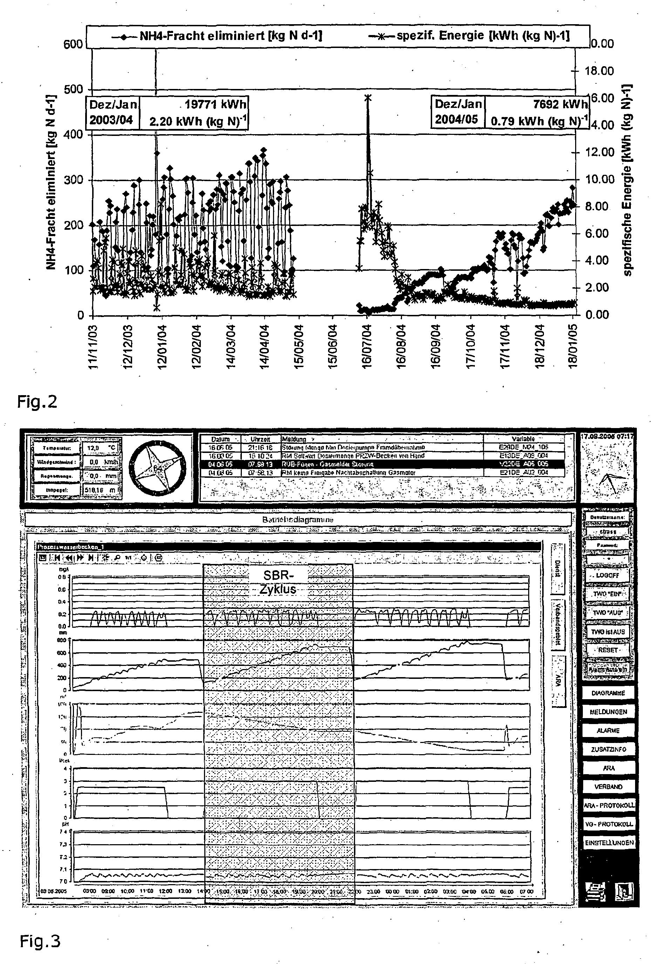

Fig. 2 zeigt ein Diagramm, bei dem über einer Zeitachse die pro Tag umgesetzte Ammoniummenge in Kilogramm Stickstoff pro Tag aufgetragen ist. Gleichzeitig ist der spezifische Energieeinsatz in Kilowatt-Stunden pro Kilogramm Stickstoff aufgetragen.

Aus dem Diagramm ist ersichtlich, dass in einer ersten Zeitperiode zwischen 11. November 2003 und 15. Mai 2004, also in einer Periode vor der Inoculation des Systems die pro Tag umgesetzte Ammoniummenge in der Mehrzahl der Tage zwischen 200 kg und 300 kg Stickstoff gelegen ist. Der spezifische Energieeinsatz in dieser Periode mit Nitritation/Denitritation (Fig. 1b) hat im Mittel 2,2 kWh/kg Stickstoff betragen. In der rechten Hälfte des Diagramms ist über einen Zeitraum zwischen 16. Juli 2004 und 18. Jänner 2005 der Verlauf der Messwerte nach der Inoculation aufgetragen. Es ist ersichtlich, dass der Ammoniumumsatz von einem anfänglich sehr niedrigen Wert wieder auf 250 kg Stickstoff pro Tag angestiegen ist. Gleichzeitig ist der Energieeinsatz pro Tag von anfänglich hohen Werten auf einen Wert von letztlich 0,79 kWh/kg Stickstoff abgesunken. Der Energieeinsatz ist somit auf ca. ein Drittel des ursprünglichen Wertes zurückgegangen.

Fig. 3 zeigt ein Diagramm, in dem verschiedene Betriebsparameter über einen Zeitraum von 24 Stunden aufgetragen sind. Übereinander sind von unten zunächst der pH-Wert, dann der Prozesswasserzulauf in l/s, darüber die gespeicherte Prozesswassermenge in m$^3$, darüber die Füllhöhe im Reaktor in mm und darüber die Sauerstoffkonzentration in mg/l aufgetragen. Der Prozessablauf untergliedert sich in 3 SBR-Zyklen von je 8 Stunden. Während der 6-stündigen Belüftungsphase erfolgt ein konstanter Prozesswasserzulauf mit einem kontinuierlichen Anstieg des Wasserspiegels. Die einzelnen Belüftungsintervalle erfolgen in einem pH-Intervall von 0,01 zwischen dem oberen und unteren Sollwert. Die tatsächlichen Schwankungen des pH-Werts sind aufgrund von Trägheitseffekten etwas größer. Nach der Belüftungsphase wird Schlamm abgesetzt und anschließend das Klarwasser bis zum Ausgangswasserspiegel abgezogen.

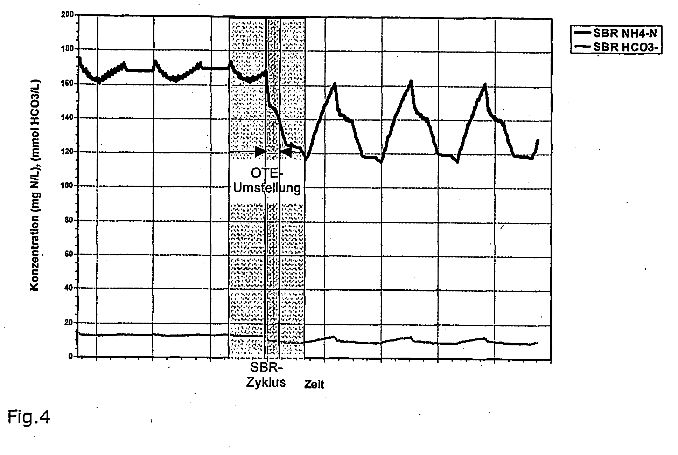

Fig. 4 zeigt die Einflüsse auf Ammonium- und Bikarbonat-Konzentration im Reaktor, wenn am Ende der Reaktionsphase von feinblasiger auf grobblasige Belüftung umgestellt wird. Dadurch wird auch bei gleich bleibendem pH-Steuerungsintervall (hier 7.25 bis 7.26) und gleich bleibender Luftmenge verstärkt $CO_2$ gestrippt und die dabei ablaufende Säurebindung für die Nitritation genutzt.

Das erfindungsgemäße Verfahren ermöglicht es, Abwässer mit hohen Ammonium-Konzentrationen mit extrem niedrigem Ressourceneinsatz zu behandeln und dabei einen robusten und stabilen Betrieb herzustellen.

**Patentansprüche**

1. Verfahren zur Behandlung von ammoniumhaltigem Abwasser in einem Einschlamm-System in einem SBR-Reaktor, bei dem in einer ersten Reaktion Ammonium zu Nitrit umgesetzt wird und in einer parallel ablaufenden zweiten Reaktion Ammonium und Nitrit zu molekularem Stickstoff umgesetzt werden, wobei die Sauerstoffkonzentration im Reaktor auf einem niedrigen Niveau gehalten wird, wobei die $O_2$-Konzentration in einem Bereich zwischen 0,2 mg/l und 0,4 mg/l gehalten wird, **dadurch gekennzeichnet, dass** der pH-Wert des Systems durch Steuerung einer intermittierenden Belüftung auf einem Sollwert geregelt wird, wobei die Schwankungsbreite des pH-Werts maximal 0,05 und vorzugsweise maximal 0,02 beträgt.

2. Verfahren nach Anspruch 1, **dadurch gekennzeichnet, dass** die $O_2$-Konzentration zwischen 0,25 mg/l und 0,35 mg/l gehalten wird.

3. Verfahren nach Anspruch 1 oder 2, **dadurch gekennzeichnet, dass** der Reaktionsphase eine Ammoniak-Entfernungsphase nachgeschaltet ist, in der der pH-Wert herabgesetzt wird.

4. Verfahren einem der Ansprüche 1 bis 3, **dadurch gekennzeichnet, dass** der Reaktionsphase eine Ammoniak-Entfernungsphase nachgeschaltet ist, in der eine grobblasige Belüftung durchgeführt wird.

5. Verfahren nach einem der Ansprüche 1 bis 4, **dadurch gekennzeichnet, dass** der Sollwert des pH-Wertes in Abhängigkeit von der Sauerstofftransfereffizienz OTE in einem Bereich liegt, der durch

$$pH_s = 7,55 - 3 * OTE / 100 \pm 0,05$$

definiert ist.

6. Verfahren nach einem der Ansprüche 1 bis 5, **dadurch gekennzeichnet, dass** der Abwasserzulauf über den Wasserspiegel während der Belüftungsphase konstant zugeleitet und möglichst großflächig verteilt wird.

7. Verfahren nach einem der Ansprüche 1 bis 6, **dadurch gekennzeichnet, dass** das Schlammalter auf einen Wert von mindestens 20 Tagen und höchstens 35 Tagen eingestellt wird.

## Claims

1. Method for the treatment of ammonium-containing waste water by means of a sludge system in an SBR reactor, in which ammonium is converted to nitrite in a first reaction and ammonium and nitrite are converted into molecular nitrogen in a second reaction carried out in parallel, with oxygen concentration in the reactor being kept at a low level, and the $O_2$-concentration being kept within a range of 0.2 mg/l to 0.4 mg/l, **characterised in that** the pH-value of the system is controlled to assume a target value by controlled intermittent aeration, the fluctuation range of the pH-value being 0.05 at most, and preferably 0.02 at most.

2. Method according to claim 1, **characterised in that** the $O_2$-concentration is kept within a range of 0.25 mg/l to 0.35 mg/l

3. Method according to claim 1 or 2, **characterised in that** the reaction phase is followed by an ammonia removal phase, in which the pH-value is reduced.

4. Method according to any of claims 1 to 3, **characterised in that** the reaction phase is followed by an ammonia removal phase, in which coarse bubble aeration is carried out.

5. Method according to any of claims 1 to 4, **characterised in that** the target value of the pH-value, depending on the oxygen transfer efficiency OTE, lies in a range which is defined by the equation

$$pH_s = 7.55 - 3* OTE/100 \pm 0.05.$$

6. Method according to any of claims 1 to 5, **characterised in that** a constant amount of incoming waste water is fed in above the water level during the aeration phase and is distributed over as large an area as possible.

7. Method according to any of claims 1 to 6, **characterised in that** the sludge age is set at a value of at least 20 days and at most 35 days.

**Revendications**

1. Procédé de traitement d'eaux usées contenant de l'ammonium dans un système de boue dans un réacteur SBR (réacteur biologique séquentiel), selon lequel par une première réaction, on transforme l'ammonium en nitrite et dans une seconde réaction, en parallèle, on transforme l'ammonium et le nitrite en azote moléculaire, procédé selon lequel

on maintient un niveau bas de la concentration en oxygène dans le réacteur, la concentration en oxygène $O_2$ étant maintenue dans une plage comprise entre 0,2 mg/l et 0,4 mg/l,

procédé **caractérisé en ce qu'**

en commandant une ventilation intermittente, on régule le pH du système sur une valeur de consigne, la plage d'oscillation du pH étant au maximum égale à 0,05 et de préférence au maximum égale à 0,02.

2. Procédé selon la revendication 1,
**caractérisé en ce qu'**
on maintient la concentration en oxygène $O_2$ entre 0,25 mg/l et 0,35 mg/l.

3. Procédé selon la revendication 1 ou 2,
**caractérisé en ce que**
la phase de réaction est suivie par une phase d'élimination d'ammoniac, au cours de laquelle, on réduit le niveau du pH.

4. Procédé selon l'une des revendications 1 à 3,
**caractérisé en ce que**
la phase de réaction est suivie d'une phase d'élimination d'ammoniac au cours de laquelle, on effectue une ventilation avec de grosses bulles.

5. Procédé selon l'une des revendications 1 à 4,
**caractérisé en ce que**
la valeur de consigne du pH est située dans une plage définie par :

$$pH_s = 7,55 - 3 * OTE / 100 \pm 0,05$$

en fonction du coefficient de transfert d'oxygène OTE.

6. Procédé selon l'une des revendications 1 à 5,
**caractérisé en ce qu'**
on répartit l'arrivée des eaux usées suivant le niveau de l'eau au cours de la phase d'aération, à un niveau constant et si possible avec une répartition sur une grande surface.

7. Procédé selon l'une des revendications 1 à 6,
**caractérisé en ce qu'**
on règle l'âge de la boue sur une valeur d'au moins 20 jours et au plus de 35 jours.

Fig.1a: Nitrifikation/Denitrifikation

1 mol $NO_3^-$

$CO_2 \rightarrow$
3.4 g $CSB_{Biomasse}$

57 g $CSB_{Substrat} \rightarrow$
17 g $CSB_{Biomasse}$

1 mol $NO_2^-$

1 mol $NO_2^-$

1.9 mol $O_2$

1 mol $NH_4^+$

0.5 mol $N_2$

Fig.1b: Nitritation/Denitritation

1 mol $NO_2^-$

1 mol $NO_2^-$

$CO_2 \rightarrow$
2.9 g $CSB_{Biomasse}$

1.4 mol $O_2$
$\approx 75\%$

34 g $CSB_{Substrat} \rightarrow$
10 g $CSB_{Biomasse}$
$\approx 60\%$

1 mol $NH_4^+$

0.5 mol $N_2$

Fig.1c: Deammonifikation

0.57 mol $NO_2^-$

1.14 mol $H^+$

partielle
Nitritation

$CO_2$

0.8 mol $O_2$
$\approx 40\%$

anaerobe
Ammonium
Oxidation

1 mol $NH_4^+$

$CO_2$  0.03 mol $H^+$

0.44 mol $N_2$
+ 0.11 m $NO_3^-$

Fig.2

Fig.3

Fig.4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0826639 A
- US 6383390 B
- WO 0005176 A
- US 5106621 A
- US 4537682 A
- EP 0751098 A1
- EP 0872451 B